# EUROPEAN PATENT SPECIFICATION

(11) **EP 2 000 443 B1**
(45) Date of publication and mention of the grant of the patent: **22.08.2012**
(21) Application number: 07010594.5
(22) Date of filing: 29.05.2007
(51) Int. Cl.: C03C 1/04, C03C 8/14, C09C 1/00, C09C 1/24, C04B 41/50, C04B 41/86, C04B 41/00

(54) **Metallic glaze composition**
Zusammensetzung für metallische Glasur
Composition de glaçure métallique

(43) Date of publication of application: 10.12.2008
(73) Proprietor: Sociedad Anónima Minera Catalano-Aragonesa, 50001 Zaragoza (ES)
(72) Inventor: Pérez Aparicio, Joaquin Javier, 12121 La Foya - Alcora (Castellon) (ES); Reverter Ibanez, Silvia, 12121 La Foya - Alcora (Castellon) (ES); Navarro Soriano, Elena, 12121 La Foya - Alcora (Castellon) (ES); Caballero Lopez, Miguel Angel, 50001 Zaragoza (ES)
(74) Representative: Schäfer, Matthias W.

(56) References cited:
- EP-A1- 1 306 355
- BE-A1- 763 269
- ES-A1- 2 246 166
- US-A- 6 132 832

## Description

This patent document refers, as its title indicates, to a metallic glaze composition of the type used in the ceramics industry for the manufacture of ceramic flooring, ceramic coverings, structural ceramics, sanitary and porcelain ceramics with a metal-effect finish, characterised in that it comprises one or more ceramic pigments the composition of which comprises at least P₂O₅ in a quantity ranging between 40 and 70% in weight, Fe₂O₃ in a quantity ranging between 10 and 50% in weight and Li₂O in a quantity ranging up to 30% in weight, optionally containing other oxides, as well as additionally containing a special low-dilatation frit preparation for improving the properties of the metallised ceramic glazings, and characterised also by a specific synthesis procedure in order to obtain said calcined metallic pigment.

The present invention comes within the framework of materials used in the ceramics industry, in particular calcined pigments, frits and glazings with metal effects, designed for their application in the industrial ceramics sector, both for ceramic tiles and structural and sanitary ceramics for the purpose of obtaining metal effects.

The use of glazes and decorations with metal effects within the ceramics sector is a traditional technique, highly valued for the aesthetic effects that can be obtained, which in turn implies creating products with a high added-value.

Industrially diverse procedures for the obtention of metal effects are commonly known and used, among which can be highlighted lead glazings with the addition of heavy metals, which are characterised in that in the majority of these preparations frits are used containing high levels of lead, heavy metal oxides such as nickel, manganese or copper (as detailed, for example, in Patent GB-369534) but which present the serious drawback of the high contamination and toxicity produced by these heavy metals, which results in their limited use in most countries due to toxicity problems.

Another known procedure are preparations of noble metals (gold, silver, platinum) along with organic substances, which are claimed in Patents US-3313632, EP-3294104, and US-6077570, among others), which allow the obtention of shiny metallic surfaces, although obtaining them does involve a series of drawbacks mainly due to the high cost of the materials which entails a large increase in the cost of the end product, and also serious contamination problems.

Alternative solutions have been sought. For example, attempts have also been made industrially to use compositions of raw materials for the obtention of preparations with phosphates and iron oxide, as described, for example, in the article "Reflective iridescent/aventurine surface glass-ceramics obtained from mica and mineral wastes" by Jesús María Rincón and Maximina Romero, published in GLASS-CERAMIC MATERIALS in 1997, and reflected in Patent ES 2161193, but this type of procedure presents a significant number of problems and drawbacks, among them the enormous difficulty of applying these products to ceramic substrates, due to the rheological properties of the raw materials required for their preparation, which in turn generates problems of thixotropy, with changes of viscosity over time and problems of cleanness and contamination of other ceramic products due to the use of highly pigmented raw materials such as iron oxide. Attention must also be drawn to the problems and drawbacks caused by the appearance of numerous application defects due to the conditions in which these types of glazes are prepared: bubbles or lumps retained in the glaze, through the use of raw materials such as iron oxide, and the need to use very aggressive fluxes when preparing glazes for low temperatures, which may involve the use of products that become toxic during firing such as fluorides, due to the emission of hydrofluoric acid.

The additional problems presented by a lack of temperature stability must also be underlined, something that may give rise to compositions encountering reaction difficulties in quick-firing ceramic cycles, and the serious problems of coupling with the ceramic support, due to the high thermal dilatation coefficient of these glazes, much higher than the ceramic bodies that are normally used, something that causes crazing and chipping of the fired ceramic piece.

A substantial improvement on these types of metallised glazes was provided by metallic pigments based on compositions of P₂O₅, Fe₂O₃ and other complementary oxides in various proportions, which when used in ceramic glazings give rise to metallised effects with excellent properties in terms of cleanness, application and a lack of defects, as claimed for example in Patent ES 2246166. These types of composition solve most of the aforementioned problems but still present considerable problems due to the type of phosphorus glaze obtained. One of these problems is the low chemical resistance of the end glazing, which can be effected by the attack of typical cleaning products, acids and bases that are relatively strong. This problem greatly restricts their use in ceramic flooring products due to the special chemical resistance requirements. Another major problem is the very high thermal dilatation coefficient obtained. Because of the special nature of phosphorus-based glazings, this coefficient is extremely high and much higher than that of the ceramic bodies that are normally used, which means that coupling with the ceramic support, once the piece has been fired, is very delicate. Crazing commonly occurs, which is particularly problematic in ceramic coverings using porous single-fired bodies and porous, rapid, double-fired bodies. In these cases, crazing in conjunction with the porosity of the body allows the flow of soluble salts through the piece, causing staining problems once it has been laid.

In order to solve existing problems in relation to metallic glazes through improved chemical resistance and a thermal dilatation coefficient in line with that of commonly used ceramic bodies, providing a solution to the new problems posed, the inventive metallic glaze composition has been designed, which comprises one or more ceramic pigments the composition of which includes at least P₂O₅ in a quantity ranging between 40 and 70% in weight, Fe₂O₃ in a quantity ranging between 10 and 50% in weight and Li₂O in a quantity ranging up to 30% in weight, optionally containing other oxides, and a special low-dilatation frit preparation for improving the properties of the metallised ceramic glazings.

A specific procedure of synthesis in order to obtain said calcined metallic pigment which is not part of the present invention comprises a sequence of phases beginning with a first phase of dosage of the raw materials that provide oxides making up a base composition of oxides for the ceramic pigment, followed by a phase of mixing of the base composition of oxides until a homogeneous mixture is obtained, continuing with a phase of calcination of said homogeneous mixture and ending with an optional phase of micronisation.

The metallic glaze composition presented herein provides multiple advantages over the procedures and products currently available, the most important being that the calcined metallic pigments are very light in colour, and in some cases are even white, which in conjunction with their structure and granulometry makes them products that are easy to handle as they can be cleaned easily and are not toxic.

Another important advantage is that the glazings obtained using these pigments acquire very favourable rheological conditions that are improved by the use of the special frit, for application or glazing using common ceramic glazing techniques, which makes them easier to use and improves the quality and stability of the product obtained.

Another advantage of the present invention is that the metallic ceramic pigment, along with the special frit, permits greater stability in terms of production variables, as the range of grinding conditions is much broader, and the margins of firing conditions are much less sensitive.

It should also be pointed out that, as opposed to non-calcined oxide glazes, new glazes using one or more metallic pigments and/or one or more special frits continue to possess the advantages in the glazing process of glazes with synthetic metallic pigments.

Finally, it is important to draw attention to the obvious advantage represented by metallic glazes prepared from special frits along with metallic pigments containing lithium, which provide the glazes with specific properties that make them of particular interest (the most noteworthy of which is a much lower dilatation coefficient), and highly suitable for their use in the ceramic supports that are commonly used. This is a fundamental requirement when using them in ceramic coverings based on porous bodies, as it enables the obtention of ceramic products with a metallic finish and excellent strength properties given that it improves the coupling between the glaze and the support, which means that resistance to the thermal shock and crazing is excellent.

Finally there is also the obvious advantage provided by the special chemical resistance improving the quality of the ceramic pieces obtained and their resistance to everyday chemical agents, acids and bases, which is fundamental in the case of ceramics used for floor tiles.

It is an object of the present invention to overcome the above-mentioned problems. This object is achieved by a metallic glaze composition having the features of claim 1 and its use in the manufacture of products. Advantageous embodiments of the present invention are described in the depending claims.

Figure 1 shows a block diagram of the specific procedure of synthesis in order to obtain the calcined ceramic pigment (B) from the raw materials (A), which is not part of the present invention.

Figure 2 shows a schematic example of installation for the specific procedure of synthesis in order to obtain the calcined metallic pigment, which is also not part of the present invention.

The inventive metallic glaze composition essentially comprises, as can be seen in the attached drawing, one or more ceramic pigments the composition of which includes at least P₂O₅ in a quantity ranging between 40 and 70% in weight, Fe₂O₃ in a quantity ranging between 10 and 50% in weight and Li₂O in a quantity ranging up to 30% in weight, optionally containing other oxides, and a special low-dilatation frit preparation for improving the properties of the metallised ceramic glazings.

The invention also relates to products deriving from these pigments and/or special frits such as metallised ceramic glazings, glaze slips, ceramic inks and granulates, and to the use of said calcined metallic pigment and/or the special frit in the manufacture of products for the ceramics industry, particularly in a glazing process that involves the application of metallic glazings, which use the calcined metallic pigment and/or the special frit on a ceramic product.

The inventive metallic glaze composition comprises one or more ceramic pigments the composition of which includes at least P₂O₅, Fe₂O₃ and Li₂O. As a result, the oxides P₂O₅, Fe₂O₃ and Li₂O are essential for the composition of the metallic pigment, as they form part of all the pigments obtained.

This base composition of the ceramic pigment may optionally contain other oxides, the use of one or more of them depending on the requirements of the calcined metallic pigment to be obtained, namely requirements such as meltability, and the tone or shine required, the preferred composition being as follows:

| | |
|---|---|
| P₂O₅ | 40-70% |
| Fe₂O₃ | 10-50% |
| Li₂O | up to 30% |
| SiO₂ | 0-30% |
| Al₂O₃ | 0-30% |
| Na₂O | 0-30% |
| K₂O | 0-30% |
| Ag₂O | 0-5% |
| MgO | 0-30% |
| CaO | 0-30% |
| CuO | 0-30% |
| CeO₂ | 0-20% |
| ZrO₂ | 0-20% |
| SnO₂ | 0-20% |

where the lower and upper limits are the minimum and maximum percentages respectively in the weight of each component.

According to a particular preferred embodiment of the invention, the base composition of oxides in the ceramic pigment comprises the following oxides in weight:

| | |
|---|---|
| P₂O₅ | 40-70% |
| Fe₂O₃ | 10-50% |
| Li₂O | up to 30% |
| Al₂O₃ | 0-30% |
| SiO₂ | 0-30% |

According to an especially preferred particular embodiment of the invention, the base composition of oxides in the ceramic pigment comprises:

| | |
|---|---|
| P₂O₅ | 45-55% |
| Fe₂O₃ | 30-45% |
| Li₂O | 5-10% |
| SiO₂ | 0-5% |
| Al₂O₃ | 0-5% |

The special ceramic frit characterised by its low dilatation coefficient comprises silicon, aluminium, lithium and magnesium in the proportions shown in the table as essential oxides.

| | |
|---|---|
| SiO₂ | 40-80% |
| Al₂O₃ | 15-35% |
| Li₂O | 2-20% |
| MgO | 2-20% |

The frit may also contain other non-substantial elements such as boron, sodium, potassium, calcium, strontium and barium. The table below indicates the percentages in weight of each oxide in the preparation of the special frit.

| | |
|---|---|
| SiO₂ | 40-80% |
| Al₂O₃ | 15-35% |
| Li₂O | 2-20% |
| MgO | 2-20% |
| B₂O₃ | 0-30% |
| Na₂O | 0-10% |
| K₂O | 0-10% |
| CaO | 0-10% |
| SrO | 0-10% |
| BaO | 0-10% |

The aforementioned preferred embodiments are selected by means of testing, with the advantages sought being the reduction in crazing and chipping and greater chemical stability. The presence of lithium in the base combination of pigments and frit therefore minimises the problems of resistance to chemical attack, while the presence of alumina and magnesium in the frit provides a low dilatation coefficient, ostensibly reducing the problems of crazing and chipping on the end product, improved behaviour being detected in the aforementioned preferred embodiments.

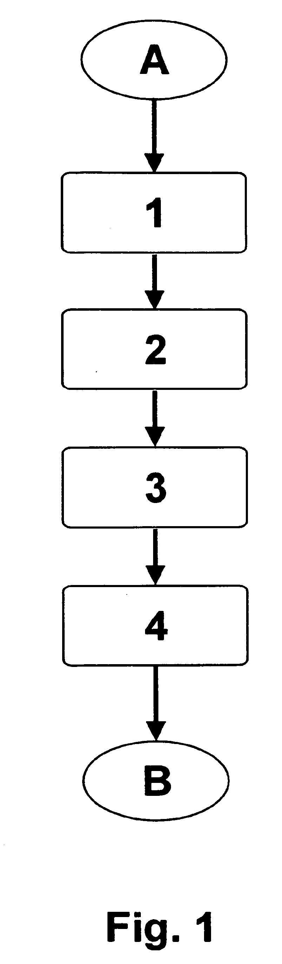

Another characteristic of the procedure of synthesis of the ceramic pigment (B) for the metallic glaze composition, which is not part of the present invention comprises a sequence of phases (1, 2 ,3 and 4), as shown in the block diagram of Figure 1, beginning with a first phase of dosage (1) of the raw materials (A), which provide the oxides comprising a base composition of oxides for the ceramic pigment, which is preferably carried out using hoppers (6) containing the raw materials (A) and a weighing element (7) for their dosage, followed by a phase of mixing (2) of the base composition of oxides until a homogeneous mixture is obtained, performed in a mixer (8), continuing with a phase of calcination (3) of said homogeneous mixture, performed in a furnace (9) and ending with an optional phase of micronising (4), preferably performed in a hammer mill (10), followed by a dynamic separator or screening (11), the micronised ceramic pigment (B) being obtained at the end.

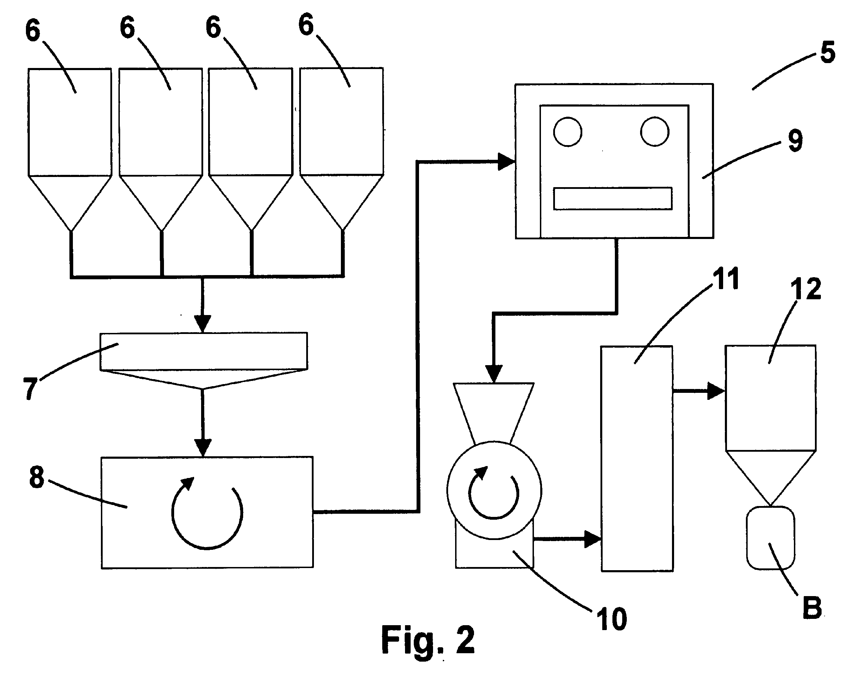

Figure 2 which is not part of the present invention shows a diagram, by way of example, of a plant (5) for the manufacture of calcined metallic ceramic pigments, in which can be seen a series of hoppers (6) containing the oxides that may form part of the base compositions of oxides, their dosage being carried out from said hoppers (6), according to a weighing element (7), prior to their being conducted to mixer (8) where they are homogenised.

The calcination phase (3) is preferably carried out in cycles and in controlled conditions, in furnaces (9) that may be of the continuous-reactor type, as the resulting calcined product does not form solid "cakes". Alternatively the calcination can be conducted in discontinuous furnaces (or kilns) at temperatures of between 400 and 1200°C with firing cycles determined by the maximum firing temperature, and which may vary between six and 30 hours, producing a calcined metallic ceramic pigment with a colouring ostensibly lighter than the mixture of raw materials prior to their calcination. For calcination in kilns, the homogeneous mixture may be encapsulated in refractory crucibles, which are stacked inside the furnace or kilns and are calcined at the appropriate temperature, between 400 and 1200°C with firing cycles of between six and 30 hours, the cycle being determined by the meltability and reactivity of the composition in oxides of the starting mixture.

The calcined metallic ceramic pigments may be micronised or otherwise prior to their application.

The calcined metallic ceramic pigment that is obtained may be micronised (4) by crushing or milling, thereby enabling its rapid dispersion in glaze slips, ceramic granulates or prepared decorative inks. This is achieved by dry grinding and subsequent classification by dynamic or screening separation. The phase of micronising (4) may be conducted in a hammer mill (10), followed by classification in a separator (11) by dynamic or screening separation and, finally, bagging in a bagging machine (12).

The calcined metallic ceramic pigment thus obtained is compatible with practically all the standard ceramic glazings available on the market.

The base compositions of oxides may be prepared from the raw materials provided by the corresponding oxides and they may then be mixed or ground by dry procedures, both jointly or separately depending on the type of raw material used (depending on its granulometry and physical properties) for the purpose of obtaining a homogeneous mixture with a controlled granulometry.

The ceramic pigments obtained take on colours, generally light, once calcined (from pure white through to beige or light green) despite comprising significant proportions of iron oxide in the starting formula, normally becoming much lighter than the initial mixtures (intense red) and, in all cases, working with them is much easier and cleaner.

It is an additional object of this invention to use the metallic glaze composition formed by the aforementioned calcined metallic pigment and the special frit in the manufacture of products for the ceramics industry. The calcined metallic pigments obtained are added to the glaze or glazing compositions in proportions that may vary between 10 and 90%. The special frit is added to the glazing in a proportion ranging between 10 and 90% in weight. The glazes or glazings may contain other components such as kaolins and other raw materials, which are added in order to provide them with the correct application conditions and in accordance with parameters such as the required level of meltability, the thickness of the layer of glaze to be applied (screen glazing, application as a ceramic decorative ink, etc) or the required appearance.

The glaze preparation may be carried out in a variety of ways, preferably by grinding with water in the case of using frits or raw materials with a high granulometry, or by simple dispersion in water in the event that the rest of the components of the preparation are micronised in addition to the calcined metallic pigment, or a "neutral" glaze in the form of slip is already available. In both cases, the end product is a ceramic glaze slip with good rheological properties.

Among the uses envisaged as an additional object of this invention is the use as a glaze slip, ceramic granulates known as pellets and ceramic dye.

Another particularly preferred use is its combination in a ceramic glazing, the metallic ceramic pigment being present in a proportion ranging between 10 and 90% and the special ceramic frit in a proportion ranging between 10 and 90% in weight, a metallised ceramic glazing being obtained that is applied on a ceramic product to obtain a glazed ceramic product, an additional stage of firing of the glazed ceramic product also possibly being comprised.

The application and/or glazing of the calcined pigments in combination or with the special frits may be conducted using any of the techniques commonly used in ceramics: screen, disc or spray glazing, or printing as a decorative ink (silk-screen printing, rotogravure, pad printing or flexographic printing), or by spraying the glaze and then proceeding to its pressing, the ceramic support being subjected, once glazed, to firing in ceramic kilns using a firing cycle with maximum temperatures that may range between 1000 and 1300°C, both for rapid cycles lasting between 30 and 90 minutes and for traditional firing cycles lasting between four and 24 hours.

The present invention is illustrated by the following embodiment examples, which are not intended to be restrictive in their scope:

### EXAMPLE 1: synthesis of pigments.

In order to obtain a calcined metallic pigment, the raw materials are dry-mixed in the correct proportions to provide the composition in oxides detailed in the table below:

| Oxide | % |
|---|---|
| P₂O₅ | 51.23 |
| Fe₂O₃ | 37.00 |
| Li₂O | 6.40 |
| Al₂O₃ | 5.32 |

The resulting mixture is calcined in a refractory capsule at a temperature of 550°C for a maximum-temperature period of eight hours, a completely white calcined product being obtained, despite the iron content in the preparation. The pigment obtained is micronised by dry grinding to a granulometry with a D99 value of 45 micron measured by a laser granulometer.

### EXAMPLE 2: Preparation of special frits

In order to obtain a special frit, the raw materials are dry-mixed in the correct proportions to provide the composition in oxides detailed in the table below:

| Oxide | % |
|---|---|
| SiO₂ | 69.1 |
| Al₂O₃ | 18.6 |
| Li₂O | 3.8 |
| K₂O | 1.7 |
| MgO | 5.9 |

The resulting mixture is melted in a frits melting furnace at a temperature of 1550°C for a period of 40 minutes at maximum temperature, a transparent ceramic frit with a linear dilatation coefficient of 20·10⁻⁷ °C⁻¹ being obtained.

### EXAMPLE 3: Preparation of glazes and metallised pieces.

Based on the frit of Example 2 and the metallic ceramic pigment of Example 1, a ceramic glaze with the composition detailed in the table below was prepared:

| Component | Quantity |
|---|---|
| Special frit from example 2 | 55 kg |
| Synthetic pigment from example 1 | 35 kg |
| Kaolin | 10 kg |
| CMC | 0.2 kg |
| TPF | 0.2 kg |
| Water | 35 l |

This preparation was ground in a ball mill to a granulometry with a 4% residue above 45 micron, and was applied on white porous single-fired body supports at a ratio of 0.5 kg/m², before being fired in a ceramic roller kiln with a standard porous single-fired cycle lasting 40 minutes and a maximum temperature of 1120°C, ceramic pieces with a smooth shiny metallic appearance being obtained.

The pieces obtained in this way were subjected to a crazing resistance test according to European standard UNE 67 105 (EN 105), and compared with metallic pieces obtained without the use of the special frit. The pieces containing the pigment and the special frit as a glazing composition withstood the three crazing cycles without any problem, while comparative pieces prepared with a standard metallised glazing crazed very visibly even before being subjected to the crazing cycles.

## Claims

1. Metallic glaze composition comprising one or more ceramic pigments composed from oxides including at least P₂O₅, Fe₂O₃ and Li₂O, **characterised in** further comprising a special ceramic frit, comprising silicon, aluminium, lithium and magnesium oxides in proportions in weight ranging between 40 and 80% of SiO₂, 15 and 35% of Al₂O₃, 2 and 20% of Li₂O, and 2 and 20% of MgO.

2. Metallic glaze composition according to claim 1 wherein the ceramic pigment comprises proportions in weight of between 40 and 70% of P₂O₅, 10 and 50% of Fe₂O₃, up to 30% of Li₂O, 0 and 30% of SiO₂, 0 and 30% of Al₂O₃, 0 and 30% of Na₂O, 0 and 30% of K₂O, 0 and 5% of Ag₂O, 0 and 30% MgO, 0 and 30% of CaO, 0 and 30 % of CuO, 0 and 20% of CeO₂, 0 and 20% of ZrO₂ and 0 and 20% of SnO₂.

3. Metallic glaze composition according to the preceding claims wherein the ceramic pigment comprises proportions in weight of between 40 and 60% of P₂O₅, 15 and 50% of Fe₂O₃, up to 10% of Li₂O, 0 and 15% of SiO₂, and 0 and 20% of Al₂O₃.

4. Metallic glaze composition according to the preceding claims wherein the ceramic pigment comprises proportions in weight of between 45 and 55% of P₂O₅, 5 and 10% of Li₂O, 0 and 5% of SiO₂, and 0 and 5% of Al₂O₃.

5. Metallic glaze composition according to claim 1 wherein the special ceramic frit may optionally comprise boron, sodium, potassium, calcium, strontium and barium oxides, the special frit having a final composition with proportions in weight of between 40 and 80% of SiO₂, 15 and 35% of Al₂O₃, 2 and 20% of Li₂O, 2 and 20% of MgO, 0 and 30% of B₂O₃, 0 and 10% of Na₂O, 0 and 10% of K₂O, 0 and 10% of CaO, 0 and 10% of SrO, and 0 and 10% of BaO.

6. Metallic glaze composition according to the preceding claims wherein the special ceramic frit is added in a proportion ranging between 10 and 90% in weight of the aforementioned composition.

7. Metallic glaze composition according to the preceding claims wherein the ceramic pigment is added in a proportion ranging between 10 and 90% in weight of the aforementioned composition.

8. Use of the metallic glaze composition, defined according to any of the preceding claims, in the manufacture of products for the ceramics industry.

9. Use of the metallic glaze composition, defined according to claim 8, forming part of a glaze slip.

10. Use of the metallic glaze composition, defined according to claim 8, in the form of a ceramic dye.

11. Use of the metallic glaze composition, defined according to claim 8, in the form of ceramic granulates.

12. Use of the metallic glaze composition, according to claim 8, in a process for the glazing of a ceramic product.

13. Use of the metallic glaze composition according to claim 12, wherein said glazing process comprises an additional stage of firing of the glazed ceramic product.

14. Use of the metallic glaze composition according to claim 8, wherein said product of the ceramics industry is selected among flooring, ceramic coverings, structural ceramics, sanitary and porcelain ceramics with a metal effect.

15. Use of the metallic glaze composition according to claim 8, wherein said product of the ceramics industry is a decorated ceramic product.

## Patentansprüche

1. Zusammensetzung für eine metallische Glasur mit einem oder mehreren keramischen Pigmenten aus Oxiden zumindest umfassend P₂O₅, Fe₂O₃ und Li₂O, **dadurch gekennzeichnet, dass**
sie weiterhin eine spezielle keramische Fritte mit Silizium-, Aluminium-, Lithium- und Magnesium -oxiden aufweist, mit Gewichtsanteilen in einem Bereich zwischen 40 bis 80% an SiO₂, 15 bis 35% an Al₂O₃, 2 bis 20% an Li₂O und 2 bis 20% an MgO.

2. Zusammensetzung für eine metallische Glasur nach Anspruch 1, wobei das keramische Pigment Gewichtsanteile aufweist zwischen 40 bis 70% an P₂O₅, 10 bis 50% an Fe₂O₃, bis zu 30% an Li₂O, 0 bis 30% an SiO₂, 0 bis 30% an Al₂O₃, 0 bis 30% an Na₂O, 0 bis 30% an K₂O, 0 bis 5% an Ag₂O, 0 bis 30% an MgO, 0 bis 30% an CaO, 0 bis 30 % an CuO, 0 bis 20% an CeO₂, 0 bis 20% an ZrO₂ und 0 bis 20% an SnO₂.

3. Zusammensetzung für eine metallische Glasur nach einem der vorhergehenden Ansprüche, wobei das keramische Pigment Gewichtsanteile aufweist zwischen 40 bis 60% an P₂O₅, 15 bis 50% an Fe₂O₃, bis zu 10% an Li₂O, 0 bis 15% an SiO₂ und 0 bis 20% an Al₂O₃.

4. Zusammensetzung für eine metallische Glasur nach einem der vorhergehenden Ansprüche, wobei das keramische Pigment Gewichtsanteile aufweist zwischen 45 bis 55% an P₂O₅, 5 bis 10% an Li₂O, 0 bis 5% an SiO₂ und 0 bis 5% an Al₂O₃.

5. Zusammensetzung für eine metallische Glasur nach Anspruch 1, wobei die spezielle keramische Fritte optional aufweist Bor, Natrium, Kalium, Calcium, Strontium und Barium Oxide, wobei die spezielle keramische Fritte eine endgültige Zusammensetzung der Gewichtsanteile aufweist zwischen 40 bis 80% an SiO₂, 15 bis 35% an Al₂O₃, 2 bis 20% an Li₂O, 2 bis 20% an MgO, 0 bis 30% an B₂O₃, 0 bis 10% an Na₂O, 0 bis 10% an K₂O, 0 bis 10% an CaO, 0 bis 10% an SrO und 0 bis 10% an BaO.

6. Zusammensetzung für eine metallische Glasur nach einem der vorhergehenden Ansprüche, wobei die spezielle keramische Fritte mit einem Gewichtsanteil zwischen 10 bis 90% der genannten Zusammensetzung hinzugefügt wird.

7. Zusammensetzung für eine metallische Glasur nach einem der vorhergehenden Ansprüche, wobei das keramische Pigment mit einem Gewichtsanteil zwischen 10 bis 90% des Gewichts der genannten Zusammensetzung hinzugefügt wird.

8. Verwendung der Zusammensetzung für eine metallische Glasur, definiert nach einem der vorhergehenden Ansprüche, bei der Herstellung von Produkten für die keramische Industrie.

9. Verwendung der Zusammensetzung für eine metallische Glasur, definiert nach Anspruch 8, für einen Glasurschlicker.

10. Verwendung der Zusammensetzung für eine metallische Glasur, definiert nach Anspruch 8, in Form eines Keramikfarbstoffs.

11. Verwendung der Zusammensetzung für eine metallische Glasur, definiert nach Anspruch 8, in Form von Keramikgranulat.

12. Verwendung der Zusammensetzung für eine metallische Glasur nach Anspruch 8 in einem Verfahren zum Glasieren eines keramischen Produktes.

13. Verwendung der Zusammensetzung für eine metallische Glasur nach Anspruch 12, wobei das Glasurverfahren einen zusätzlichen Schritt des Brennens des glasierten keramischen Produktes aufweist.

14. Verwendung der Zusammensetzung für eine metallische Glasur nach Anspruch 8, wobei das Produkt der keramischen Industrie ausgewählt ist für Fußbodenbeläge, keramische Beläge, Strukturkeramiken, Sanitär- und Porzellan-Keramiken mit einem Metall-Effekt.

15. Verwendung der Zusammensetzung für eine metallische Glasur nach Anspruch 8, wobei das Produkt der keramischen Industrie ein dekoriertes keramisches Produkt ist.

## Revendications

1. Une composition de glaçure métallique comprenant un ou plusieurs pigments céramiques composés d'oxydes incluant, au minimum, P₂O₅, Fe₂O₃ et Li₂O, **caractérisée en ce qu'**elle comprend, en outre, un revêtement céramique spécial composé d'oxydes de silicone, d'aluminium, de lithium et de magnésium dans des proportions en poids entre 40 et 80% de SiO₂, 15 et 35% de Al₂O₃, 2 et 20% de Li₂O, et 2 et 20% de MgO.

2. Une composition de glaçure métallique conformément à la Revendication 1 dans laquelle le pigment céramique comprend en outre des proportions en poids entre 40 et 70% de P₂O₅, 10 et 50% de Fe₂O₃, jusqu'à 30% de Li₂O, 0 et 30% de SiO₂, 0 et 30% de Al₂O₃, 0 et 30% de Na₂O, 0 et 30% de K₂O, 0 et 5% de Ag₂O, 0 et 30% de MgO, 0 et 30% de CaO, 0 et 30% de CuO, 0 et 20% de CeO₂, 0 et 20% de ZrO₂ et 0 à 20% de SnO₂.

3. Une composition de glaçure métallique conformément aux Revendications précédentes dans laquelle le pigment céramique comprend en outre des proportions en poids entre 40 et 60% de P₂O₅, 15 et 50% de Fe₂O₃, jusqu'à 10% de Li₂O, 0 et 15% de SiO₂ et 0 et 20% de Al₂O₃.

4. Une composition de glaçure métallique conformément aux Revendications précédentes dans laquelle le pigment céramique comprend en outre des proportions en poids entre 45 et 55% de P₂O₅, 5 et 10% de Li₂O, 0 et 5% de SiO₂ et 0 et 5% de Al₂O₃.

5. Une composition de glaçure métallique conformément à la Revendication 1 dans laquelle le revêtement céramique spécial se compose d'oxydes de bore, sodium, potassium, calcium, strontium et baryum, le revêtement spécial présentant une composition finale avec des proportions en poids entre 40 et 80% de SiO₂, 15 et 35% de Al₂O₃, 2 et 20% de Li₂O, et entre 2 et 20% de MgO, 0 et 30% de B₂O₃, 0 et 10% de Na₂O, 0 et 10% de K₂O, 0 et 10% de CaO, 0 et 10% de SrO, et 0 et 10% de BaO.

6. Une composition de glaçure métallique conformément aux Revendications précédentes dans laquelle le revêtement céramique spécial est ajouté dans une proportion en poids variant de 10 à 90% de la composition précitée.

7. Une composition de glaçure métallique conformément aux Revendications précédentes dans laquelle le pigment céramique est ajouté dans une proportion en poids variant de 10 à 90% de la composition précitée.

8. Utilisation de la composition de glaçure céramique définie par l'une quelconque des Revendications précédentes dans la manufacture de produits pour l'industrie de la céramique.

9. Utilisation de la composition de glaçure céramique définie par la Revendication 8 comme une partie intégrante d'une barbotine de glaçure.

10. Utilisation de la composition de glaçure céramique définie par la Revendication 8 sous la forme d'un colorant céramique.

11. Utilisation de la composition de glaçure céramique définie par la Revendication 8 sous la forme de granulés céramiques.

12. Utilisation de la composition de glaçure céramique conformément à la Revendication 8 dans le processus d'application d'une glaçure sur un produit céramique.

13. Utilisation de la composition de glaçure céramique conformément à la Revendication 12 où ledit processus d'application de la glaçure comprend une étape supplémentaire de cuisson du produit céramique.

14. Utilisation de la composition de glaçure céramique conformément à la Revendication 8, où ledit produit de l'industrie céramique fait partie des produits de revêtements de sols, revêtements céramiques, céramiques structurées, céramiques en porcelaine et céramiques sanitaires avec un effet métallisé.

15. Utilisation de la composition de glaçure céramique conformément à la Revendication 8, où ledit produit de l'industrie céramique est un produit céramique décoré.
